# EUROPÄISCHE PATENTSCHRIFT

(11) **EP 2 866 319 B1**
(45) Veröffentlichungstag und Bekanntmachung des Hinweises auf die Patenterteilung: **17.04.2019**
(21) Anmeldenummer: 14190573.7
(22) Anmeldetag: 28.10.2014
(51) Int. Cl.: H02B 1/21

(54) **Gesicherter Sammelschienenadapter**
Protected busbar adapter
Adaptateur de barre omnibus protégé

(30) Priorität: 28.10.2013 DE 102013111857
(43) Veröffentlichungstag der Anmeldung: 29.04.2015
(73) Patentinhaber: Klaus Bruchmann GmbH, 4616 Weißkirchen an der Traun (AT)
(72) Erfinder: Bruchmann, Klaus, 96450 Coburg (DE)
(74) Vertreter: Appelt, Christian W.

(56) Entgegenhaltungen:
- DE-A1- 10 104 516
- DE-B3-102007 044 390
- DE-U1- 29 705 224

## Beschreibung

Die vorliegende Erfindung bezieht sich auf einen Sammelschienenadapter und insbesondere auf einen Sammelschienenadapter mit einer integrierten Sicherungseinheit, um Strompfade zu angeschlossenen Geräten zu sichern.

### Beschreibung

Sammelschienenadapter eignen sich insbesondere zur Befestigung von elektrischen Installationsgeräten an elektrischen Sammelschienen-Systemen, die zur Stromversorgung dienen. Sammelschienen sind dabei insbesondere für sehr hohe Stromstärken ausgelegt, um mehrere Geräte gleichzeitig mit ausreichend Strom zu versorgen. Beispielsweise stehen auf Sammelschienen-Systemen Stromstärken von bis zu 630 A (oder auch mehr) zur Verfügung. Um diese hohen Stromstärken übertragen zu können, weisen Sammelschienen einen entsprechenden Querschnitt auf (beispielsweise 30x10 mm²) und sind entsprechend abgesichert.

Zu den angeschlossenen Geräten hin sind die Stromzuleitungen entsprechend kleiner bemessen (beispielsweise mit Querschnitten von 4-6 mm²), da dort deutlich niedrigere Stromstärken benötigt werden (z. B. 20 ... 30A). Da die Gesamtstromstärke, die auf einer Sammelschiene zur Verfügung steht, die Geräte zerstören würde, werden die Geräte für den Fall eines Kurzschlusses separat abgesichert. Die entsprechenden Sicherungen sind häufig Geräte-spezifisch beziehungsweise in den Geräten direkt integriert. Daher bieten diese Sicherungen keinen Schutz für einen Kurzschluss auf der (Kabel-) Verbindung von der Sammelschiene zu den Geräten.

Aus den Dokumenten DE 297 05 224 U1, DE 10 2007 044 390 B3 und DE 101 04 516 A1 sind Einrichtungen mit einer NH-Sicherungs- oder NH-Lastschaltleiste sowie eine schaltbare Sicherungsleiste oder ein Sicherungslasttrennschalter zum Anschluss an Sammelschienen bekannt, an die jedoch keine zusätzlichen Geräte, wie zum Beispiel Motorschutzschalter, Schütze, FI-Schalter und andere Modulgeräte befestigt werden können.

Es ist eine Aufgabe der vorliegenden Erfindung, die Sicherheit von Sammelschienen-Systemen weiter zu erhöhen.

Diese Aufgabe wird durch einen Sammelschienenadapter nach Anspruch 1 gelöst. Die Ansprüche 2 bis 12 beziehen sich auf vorteilhafte Ausgestaltungen des Sammelschienenadapters nach Anspruch 1.

Entsprechend der vorliegenden Erfindung umfasst ein Sammelschienenadapter wie in Anspruch 1 definiert ist. Die Gehäusestruktur kann beispielsweise zweiteilig oder dreiteilig ausgebildet sein, so dass die einzelnen Teile der Gehäusestruktur über Verbindungsstrukturen wie beispielsweise Verriegelungsvorrichtungen miteinander verbunden werden.

Beispielsweise sind die Isolierwände parallel zu den Strompfaden ausgebildet und trennen die Gehäusestruktur in Kammern, in welchen sich die Strompfade erstrecken. Zwischen den Kammern sind beispielsweise keine oder nur indirekte Verbindung ausgebildet, so dass in der Gehäusestruktur keine Überbrückung der Strompfade durch einen geradlinigen Gegenstand (z.B. ein Schraubenzieher) möglich ist. Optional sind daher in den Isolierwänden keine oder nur sehr kleine Löcher oder Öffnungen ausgebildet, so dass selbst bei Einführung eines Gegenstandes keine leitfähige Verbindung zwischen den Strompfaden hergestellt werden kann. Die Isolierwände können sich insbesondere parallel zu den ebenfalls parallel ausgebildeten Kontaktverbindungen erstrecken. Optional sind Isolierwände ebenfalls in der Sicherungseinheit ausgebildet, um dort Kammern für die Strompfade bereitzustellen, wobei vorteilhafterweise wiederum keine direkten Verbindungen zwischen den Strompfaden existieren. Als direkte Verbindungen können in diesem Zusammenhang beispielsweise geradlinige Verbindungen angesehen werden (wenn beispielsweise die Strompfade in Sichtkontakt zueinander sind).

Optional weist die Sicherungseinheit weiter zumindest einen herausziehbaren Schieber auf, der ausgebildet ist, um die erste Sicherung und/oder die zweite Sicherung aus der Sicherungseinheit herauszuziehen, um dadurch den ersten und/oder den zweiten Strompfad zu unterbrechen. Der herausziehbare Schieber ist beispielsweise ein erster Schieber zum Herausziehen der ersten Sicherung und die Sicherungseinheit kann weiter einen zweiten Schieber zum Herausziehen der zweiten Sicherung aufweisen, wobei der erste und zweite Schieber unabhängig voneinander herausziehbar sind, um dadurch den ersten und zweiten Strompfad unabhängig voneinander zu unterbrechen.

Der oder die herausziehbare(n) Schieber bietet den Vorteil, dass es dadurch möglich wird, die erste und/oder die zweite Sicherung leicht auszuwechseln, da durch das Herausziehen zum einen die Strompfade unterbrochen werden und zum anderen die Sicherungen für einen Nutzer leicht zugänglich werden.

Optional weist der Sammelschienenadapter zumindest eine Lichtsignalisierungseinrichtung auf, die ausgebildet ist, um ein Lichtsignal zu geben, wenn die erste und/oder die zweite Sicherung defekt sind. Das Lichtsignal kann zum Beispiel bei einem Defekt die Farbe wechseln, eingeschaltet oder ausgeschaltet werden. Die Lichtsignalisierungseinrichtung kann beispielsweise eine LED-Einrichtung mit einer Vielzahl von LEDs sein, die für jede der ausgebildeten Stromzuleitungen ein Lichtsignal bereitstellt, wenn die entsprechende Sicherung nicht mehr intakt ist und ausgewechselt werden muss. Optional ist es ebenfalls möglich, über die Lichtsignalisierungseinrichtung anzuzeigen, wenn an den Kontalctverbindungen eine Spannung anliegt.

Optional weist der Sammelschienenadapter weiter eine dritte Stromzuleitung, eine dritte Kontaktverbindung und eine dritte Sicherungshalterung auf. Die dritte Sicherungshalterung ist beispielsweise ausgebildet, um eine dritte Sicherung lösbar zu halten, sodass nach einem Einsetzen der dritten Sicherung in die dritte Sicherungshalterung die dritte Stromzuleitung und die dritte Kontaktverbindung verbunden sind, um einen dritten Strompfad bereitzustellen. Der dritte Strompfad verbindet die dritte Stromzuleitung mit der dritten Kontaktverbindung, wobei der dritte Strompfad sowohl von dem ersten Strompfad als auch von dem zweiten Strompfad zumindest teilweise durch zumindest eine der Isolierwände der Gehäusestruktur isoliert ist.

Die erste, zweite und dritte Sicherung können übliche Standardsicherungen sein, die entsprechend der Stromlast ausgewählt werden, die auf den Stromzuleitungen zu erwarten sind bzw. für welche die Stromzuleitungen ausgelegt sind (beispielsweise in Folge des Querschnittes für die Stromzuleitungen). Die Sicherungen selbst sind dabei nicht notwendigerweise Teil des Erfindungsgegenstandes, sondern können als Standardkomponenten in den Sammelschienenadapter entsprechend eingesetzt werden.

Stromschienenadapter sind häufig mehrteilig ausgebildet und weisen zumindest ein Ober- und ein Unterdeck auf. Diese Bauweise macht eine Integration einer Sicherungseinheit direkt in den Stromschienenadapter schwierig, da das Oberdeck im Allgemeinen nach oben von dem Unterdeck entfernbar ist und eine Integration im Unterdeck oder im Oberdeck bei konventionellen Stromschienensystemen nicht möglich ist. Dieses Problem löst die Erfindung dadurch, dass die Sicherungseinheit des Sammelschienenadapters lateral neben (in einer Ebene, die durch die Stromschienen aufgespannt wird) dem Oberdeckelement ausgebildet ist und ein Teil des Unterdeckelementes ist. Um es trotzdem zu ermöglichen, dass das Oberdeckelement an das Unterdeckelement fixiert werden kann, weist das Ober- und Unterdeckelement zumindest eine Verriegelungseinrichtung auf, die beispielsweise Vorsprünge und Öffnungen aufweisen kann, die miteinander in Eingriff gelangen, wenn das Ober- und das Unterdeck miteinander verbunden werden. Die optionale Verriegelungsvorrichtung arretiert dann das Ober- und das Unterdeckelement in der Art, dass die Vorsprünge sich nicht aus den Öffnungen, die an dem Ober- und Unterdeck ausgebildet sind, herausbewegen können, solange die Verriegelungsvorrichtung sich in der Verriegelungsposition befindet.

Daher weist die Gehäusestruktur ein Oberdeckelement, ein Unterdeckelement und eine Verriegelungsvorrichtung auf. Die Verriegelungsvorrichtung ist ausgebildet, um das Oberdeckelement und das Unterdeckelement miteinander zu verriegeln, wobei das Oberdeckelement ausgebildet ist, um elektrische Geräte daran zu befestigen und das Unterdeckelement ausgebildet ist, um eine elektrische Verbindung mit der ersten und zweiten Sammelschienen bereitzustellen. Optional ist die Verriegelungsvorrichtung weiter ausgebildet, um eine parallele oder antiparallele Verschiebung des Unterdeclcelementes und des Oberdeckelementes relativ zueinander zu verhindern. Die Sicherungseinheit ist beispielsweise in dem Unterdeckelement ausgebildet, wobei das Oberdeckelement lateral neben der Sicherungseinheit angeordnet ist.

Der Begriff lateral bezieht sich in der vorliegenden Anmeldung auf die Ebene, in der die Stromschienen liegen, so dass Elemente, die in dieser Ebene verschoben sind, auch als lateral nebeneinander bezeichnet werden.

Optional weist die Verriegelungsvorrichtung einen Verriegelungsschieber auf, der ausgebildet ist, um das Unterdeckelement und das Oberdeckelement miteinander zu verriegeln, wobei die Verriegelungsvorrichtung optional weiter eine Feder aufweist, die den Verriegelungsschieber in seine Verriegelungsposition vorspannt.

Bei weiteren Ausführungsbeispielen weist die Gehäusestruktur ein Oberdeck, ein Unterdeck und ein Sicherungsdeck auf und ist ausgebildet, um das Oberdeck zwischen dem Unterdeck und dem Sicherungsdeck trennbar miteinander zu verbinden. Der Sammelschienenadapter kann wiederum eine Verriegelungsvorrichtung aufweisen, die ausgebildet ist, um das Oberdeck, das Unterdeck und das Sicherungsdeck miteinander zu verbinden.

Optional weist das Sicherungsdeck zumindest ein erstes Kontalctelement und ein zweites Kontaktelement auf. Dementsprechend weisen das Oberdeckelement und das Unterdeckelement Öffnungen auf, um das erste Kontaktelement und das zweite Kontaktelement aufzunehmen und darin zu fixieren.

Die Gehäusestruktur kann weiter eine Schalterverriegelung aufweisen, die ausgebildet ist, um durch ein Einführen des ersten Kontaktelementes und des zweiten Kontaktelementes in die Öffnungen des Oberdeckelementes und/oder des Unterdeckelementes das Sicherungsdeck an das Oberdeckelement und das Unterdeckelement zu befestigen. Dabei erstreckt sich der erste Strompfad von der ersten Stromzuleitung über die erste Sicherung über das erste Kontalctelement zu der ersten Kontaktverbindung und der zweite Strompfad von der zweiten Stromzuleitung über die zweite Sicherung, das zweite Kontalctelement zu der zweiten Kontaktverbindung. Optional können das erste und zweite Kontalctelement eine teilweise Isolier- und Verstärkungshülle aufweisen, um dadurch die Strompfade so weit wie möglich zusätzlich zu isolieren.

Optional können das Oberdeck, das Unterdeck und das Sicherungsdeck über die Schalterverriegelung gemeinsam verriegelt und entriegelt werden.

Der Sammelschienenadapter weist weiter eine Tragschiene auf, die ausgebildet ist, um elektrische Geräte daran in unterschiedlichen Positionen an dem Oberdeckelement des Sammelschienenadapters zu befestigen.

Optional weist die erste, zweite und dritte Sicherungshalterung jeweils einen ersten Kontakt auf und die erste, zweite und dritte Kontaktverbindung sind jeweils mit dem ersten Kontakt der ersten, zweiten und dritten Sicherungshalterung einstückig ausgebildet (d.h. als eine Einheit). Daher ist der erste Kontakt der ersten (oder zweiten oder dritten) Sicherungshalterung einteilig mit der ersten (oder zweiten oder dritten) Kontaktverbindung ausgebildet.

Ausführungsbeispiele der vorliegenden Erfindung weisen eine Reihe von Vorteilen auf. Zum Beispiel ist das Sicherungsdeck ebenfalls für konventionelle Sammelschienensysteme einsetzbar, da die Kontaktelemente in die vorhandenen Kontaktöffnungen einsetzbar sind und über einen Arretiermechanismus an dem Ober- und Unterdeck fixiert werden. Optional kann das Sicherungsdeck über einen zusätzlichen Fixiermechanismus an dem Oberdeck angebracht werden. Die Stromzuleitungen sind dabei wie bei den zuvor genannten Ausführungsbeispielen analog ausgebildet.

Somit löst der erfindungsgemäße Sammelschienenadapter weiter das Problem einer zuverlässigen Sicherung von Sammelschienensystemen, und zwar auch für den Fall, dass das Sammelschienensystem durch ein Ober- und Unterdeck mehrteilig aufgebaut ist Diese Aufgabe wird dadurch gelöst, dass die Sicherungseinheit lateral zu dem Oberdeckelement verschoben ist und eine Verriegelungsvorrichtung vorgesehen ist, um das Ober- und Unterdeckelement entsprechend zu verriegeln. Optional weist der Sammelschienenadapter Signalisierungseinrichtungen wie beispielsweise LED-Einheiten auf, die signalisieren, wenn eine Sicherung defekt ist und ausgetauscht werden muss.

Mit dem erfindungsgemäßen Sammelschienenadapter wird eine zuverlässige Sicherung von Sammelschienensystemen bereitgestellt, wobei die Sammelschienen beispielsweise Stromstärken von bis zu oder mehr als 630A erlauben und einen Querschnitt von beispielsweise 30x10 mm haben, wobei die Querschnitte entsprechend den Anforderungen anders gewählt sein können. Für derartige Systeme sind die entsprechenden Strompfade kurzschlussfest in dem Gehäuse zu verlegen, was Ausführungsbeispiele der vorliegenden Erfindung sicherstellen. Der vorliegende Sammelschienenadapter ist beispielsweise für Stromzuleitungen ausgelegt, deren Leitungsquerschnitt von 1,5 mm² ... 2,5 mm² bis 16 mm² (oder 4, 6, 10 mm²) variieren kann. Die Kontaktverbindungen sind im Sammelschienenadapter durch die Trennwände kurzschlussfest verlegt. Nicht kurzschlussfest dagegen sind die frei verlaufenden Stromzuleitungen.

Der Kurzschlussstrom kann für eine 630A-Sammelschiene beispielsweise einen Wert von über 25.000 A aufweisen, wobei der i²t-Wert über 5.000.000 A²s sein kann. Solche hohen prospektiven Werte würden in einem Kurzschlussfall die ungeschützten Stromzuleitungen und die daran angeschlossenen Geräte zerstören. Beispielsweise würde das Kupfer der Stromzuleitungen schmelzen und verdampfen. Für die Sicherungen bis zu 63A, die im vorliegenden Sammelschienenadapter zum Einsatz kommen, ist beispielsweise bei einem Kurzschluss nur ein maximaler i²t-Wert von 21.200 A²s möglich, denn diese schalten einen Kurzschluss innerhalb 0,1 ms ab und begrenzen die prospektiven hohen Werte auf dieses niedrige Niveau. Durch diese starke Begrenzung sind die gegenüber den Sammelschienen schwachen Stromzuleitungen ausreichend geschützt. Da ein Leitungsquerschnitt von 1,5 mm² einen i²t-Wert von ungefähr 29.000 A²s verträgt, ist somit eine zuverlässige Sicherung gewährleistet. Wird beispielsweise nur eine 25 A starke Sicherung eingesetzt, so würde der maximale i²t-Wert nur 4.000 A²s betragen. Für andere Sicherungen (z.B. für 2A, 4A, 6A, 10A, 16A, 25A, 32A, 35A, 40A, 50A) weichen diese Werte weiter ab.

Ein weiterer Vorteil des Sammelschienenadapters gemäß der vorliegenden Erfindung ist ihr integraler Aufbau, wobei alle stromführenden Komponenten in einer Gehäusestruktur angeordnet sind und durch Gehäusewände voneinander getrennt sind und Sicherungen entlang der Strompfade entsprechend integriert sind.

Die Erfindung wird nachfolgend bezugnehmend auf den beiliegenden Figuren näher beschrieben, wobei:
- Fig. 1: einen Sammelschienenadapter gemäß einem Ausführungsbeispiel der vorliegenden Erfindung zeigt;
- Fig. 2: eine Raumansicht des erfindungsgemäßen Sammelschienenadapters zeigt;
- Fig. 3: einen Sammelschienenadapter mit einem abnehmbaren Oberdeck zeigt;
- Fig. 4: einen Sammelschienenadapter mit herausziehbaren Sicherungen zeigt;
- Fig. 5: weitere Details bezüglich der Fixierung des abnehmbaren Oberdecks des Sammelschienenadapters zeigt;
- Fig. 6: eine weitere Querschnittsansicht des erfindungsgemäßen Sammelschienenadapters durch eine der erfindungsgemäß ausgebildeten Isolierwände zeigt;
- Fig. 7: den Sammelschienenadapter mit abgenommenen Oberdeck nach Lösen einer erfindungsgemäßen Verriegelungsvorrichtung zeigt;
- Fig. 8: einen Sammelschienenadapter mit aufgesetzter Sicherungseinheit in einem Sicherungsdeck zeigt;
- Fig. 9: ein abgenommenes Sicherungsdeck des Sammelschienenadapters nach Fig. 8 zeigt;
- Fig. 10A,B: weitere Ansichten des abgenommen Sicherungsdecks von der Fig. 9 zeigt; und
- Fig. 11: eine Querschnittsansicht und eine Draufsicht des abgenommenen Sicherungsdecks zeigt.

In den Figuren werden gleiche, ähnliche oder gleich wirkendende Merkmale mit gleichen oder ähnlichen Bezugszeichen versehen, wobei diese Merkmale häufig nur einmal beschrieben werden und die betreffenden Beschreibungen sich daher auf mehrere Figuren beziehen können.

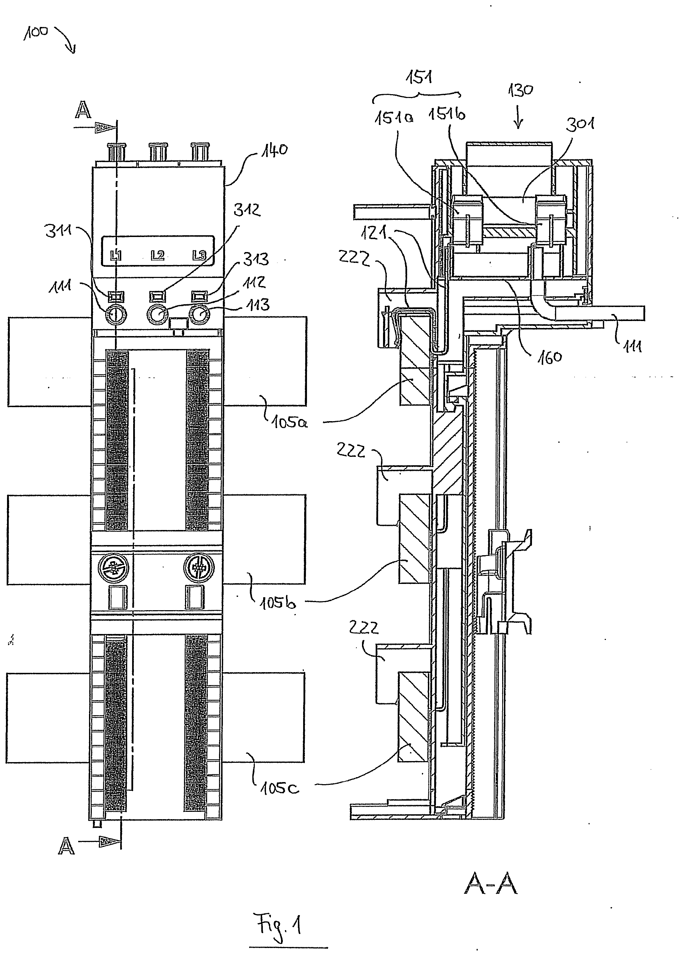

Fig. 1 zeigt einen Sammelschienenadapter 100 zum Kontaktieren einer ersten Sammelschiene 105a, einer zweiten Sammelschiene 105b und einer dritten Sammelschiene 105c, wobei links eine Draufsicht und rechts eine Querschnittsansicht durch die Querschnittsebene A-A gezeigt ist. Der Sammelschienenadapter 100 weist eine Gehäusestruktur 140 auf, in der eine Sicherungseinheit 130 angeordnet ist, wobei die Sicherungseinheit 130 in der gezeigten Querschnittsansicht eine erste Sicherungshalterung 151 zum Halten der ersten Sicherung 301 aufweist. Eine zweite und dritte Sicherungshalterung sind in der Fig. 1 nicht zu sehen. Der Sammelschienenadapter 100 weist drei Öffnungen auf, durch die sich eine erste, zweite und dritte Stromzuleitung 111, 112, 113 erstrecken, die ihrerseits durch den Sammelschienenadapter 100 mit den drei Sammelschienen 105a, 105b, 105c über die erste, zweite und dritte Sicherung verbunden sind.

In der rechts gezeigten Querschnittsansicht A-A ist die Verbindung zwischen der ersten Stromzuleitung 111 und der ersten Sammelschiene 105a zu sehen, wobei die erste Stromzuleitung 111 über eine erste Öffnung in die Gehäusestruktur 140 gelangt und eine erste Sicherungshaltung 151 kontaktiert. Andererseits wird die erste Stromschiene 105a durch eine Stromschienenhalterung 222 fixiert und durch eine erste Kontaktverbindung 121 kontaktiert, die ihrerseits mit der ersten Sicherungshaltung 151 verbunden ist. Die Sicherungshaltung 151 weist einen ersten Kontakt 151a und einen zweiten Kontakt 151b auf, zwischen denen die erste Sicherung 301 eingesetzt werden kann, wobei der zweite Kontakt 151b mit der ersten Stromzuleitung 111 verbunden ist und der erste Kontakt 151a mit der ersten Kontaktverbindung 121 verbunden ist. Nach dem Einsetzen der ersten Sicherung 301 ist ein erster Strompfad von der ersten Stromschiene 105a über die erste Kontaktverbindung 121 hin zu der ersten Sicherungshaltung 151 und über die erste Sicherung 301 zur ersten Stromzuleitung 111 ausgebildet. Die erste Sicherung 301 selbst braucht nicht Teil des Sammelschienenadapters gemäß der vorliegenden Erfindung sein.

Die Stromführung so wie sie in der Querschnittsansicht A-A gezeigt ist, ist in analoger Weise auch für die Verbindung zwischen der zweiten Stromschiene 105b und der zweiten Stromzuleitung 112 ausgebildet, wobei zwischen der zweiten Stromschiene 105b und der zweiten Stromzuleitung 112 die zweite Sicherung 302 einsetzbar ist, sodass nach dem Einsetzen der zweiten Sicherung 302 ein zweiter (gesicherter) Strompfad gebildet ist. Gleiches gilt für die dritte Stromschiene 105c, die über eine dritte Kontaktverbindung (in der Fig. 1 nicht gezeigt) mit einer dritten Sicherungshalterung verbunden ist, in die eine dritte Sicherung 303 einsetzbar ist, um dadurch einen dritten (gesicherten) Strompfad zwischen der dritten Stromschiene 105c, über die dritte Kontaktverbindung, die dritte Sicherung hin zu der dritten Stromzuleitung 113 bereitzustellen.

Der Begriff Gehäusestruktur 140 oder Gehäuse schließt in der vorliegenden Anmeldung alle Haltestrukturen oder Halterahmen ein, an denen die einzelnen Komponenten befestigt werden können, ohne notwendigerweise einen Sichtschutz, Staubschutz oder Feuchtigkeitsschutz zu bieten. Die Gehäusestruktur 140 soll vor allem einen Halt und einen isolierenden Schutz für die darin ausgebildeten Komponenten bieten. Insbesondere bietet die Gehäusestruktur einen isolierenden Schutz für die ersten bis dritten Strompfade, wozu beispielsweise Isolierwände 160 ausgebildet sind, wie sie nachfolgend in den Fig. beschrieben werden. Das Gehäuse weist insbesondere ein Material auf, welches stabil ist, um einen unbeabsichtigten Eingriff von außen zu widerstehen, und weist eine geschlossene Form auf, so dass beispielsweise mit einem Schraubenzieher nicht ins Innere des Gehäuses gelangt werden kann.

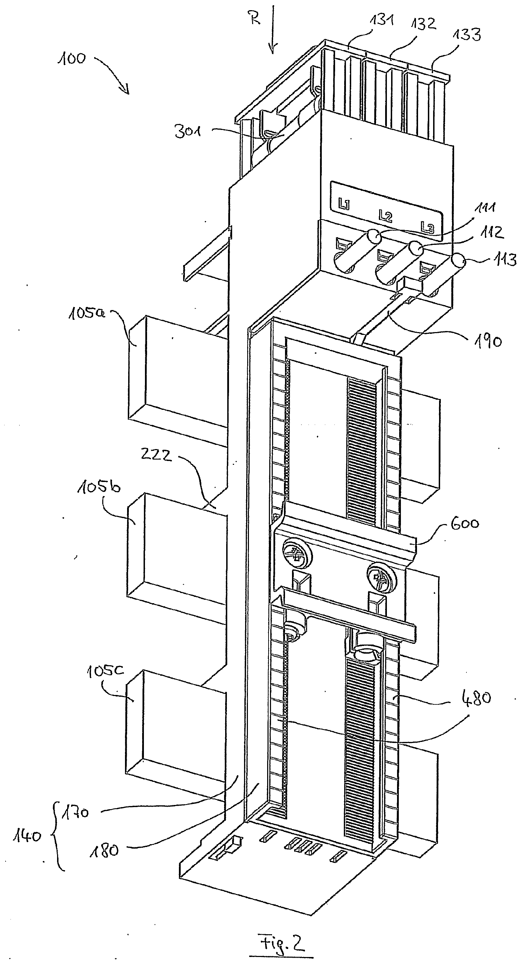

Fig. 2 zeigt eine Raumansicht des erfindungsgemäßen Stromschienenadapters 100 mit der Gehäusestruktur 140 und mit der ersten Stromzuleitung 111, der zweiten Stromzuleitung 112 und der dritten Stromzuleitung 113, die über den ersten bis dritten Strompfad mit jeweils der ersten Stromschiene 105a, der zweiten Stromschiene 105b und der dritten Stromschiene 105c elektrisch verbunden sind. Entlang der einzelnen Strompfade ist jeweils eine Sicherung (das heißt die erste Sicherung 301, die zweite Sicherung 302 und die dritte Sicherung 303) ausgebildet.

In der gezeigten Form ist die Sicherungseinheit 130 zumindest teilweise aus der Gehäusestruktur 140 herausziehbar, wobei jede einzelne Sicherung einzeln herausgezogen werden kann, sodass die Sicherungen einzeln ersetzt werden können. Beispielsweise ist die erste Sicherung 301 in einem ersten Schieber 131 angeordnet, der senkrecht zur Einschubrichtung R an zwei gegenüber liegenden Seiten offen ist, sodass ein Herausnehmen der ersten Sicherung 301 leicht durch einen Nutzer möglich ist. Außerdem ist in dem gezeigten Ausführungsbeispiel die Sicherungseinheit 130 in einer integralen Gehäusestruktur 140 untergebracht und kann als solche (abgesehen von den Schiebern) nicht von dieser getrennt werden (gleiches gilt für die zweite und dritte Sicherung, die in der gezeigten Darstellung nicht zu sehen sind).

Bei dem gezeigten Ausführungsbeispiel weist die Gehäusestruktur 140 ein Unterdeckelement 170 und ein Oberdeckelement 180, wobei die beiden Deck-Elemente 170, 180 lösbar über eine Verriegelungsvorrichtung 190 miteinander verbindbar und lösbar sind.

Das Unterdeckelement 170 umfasst die Befestigungselemente 222 zum Befestigen des Sammelschienenadapters 100 an den Sammelschienen 105, wobei der in den Figuren dargestellte Sammelschienenadapter 100 ein Adapter für ein 3-poliges System ist, so dass insgesamt 3 Befestigungselemente 222 zum Befestigen an insgesamt 3 Kontaktverbindungen für Sammelschienen 105 vorgesehen sind. Das Oberdeck-element 180 umfasst in Längsrichtung (vertikal in der Fig. 2) verlaufende Haltestege 480, auf denen eine Tragschiene 600 befestigt ist, die in unterschiedlicher Position an dem Oberdeckelement 180 angebracht werden kann und der Aufnahme von elektrischen Geräten, insbesondere von elektrischen Installationsgeräten dient. Weitere Details für das Oberdeckelement 180 und Unterdeckelement 170 sind nicht dargestellt, da sie für das Verständnis der vorliegenden Erfindung nicht von Bedeutung sind.

Bei dem gezeigten Ausführungsbeispiel ist die Sicherungseinheit 130 in dem Unterdeckelement 170 integriert und das Lösen des Oberdeckelements 180 von dem Unterdeckelement 170 mit Hilfe der Verriegelungsvorrichtung 190 wird weiter unten detailliert beschrieben.

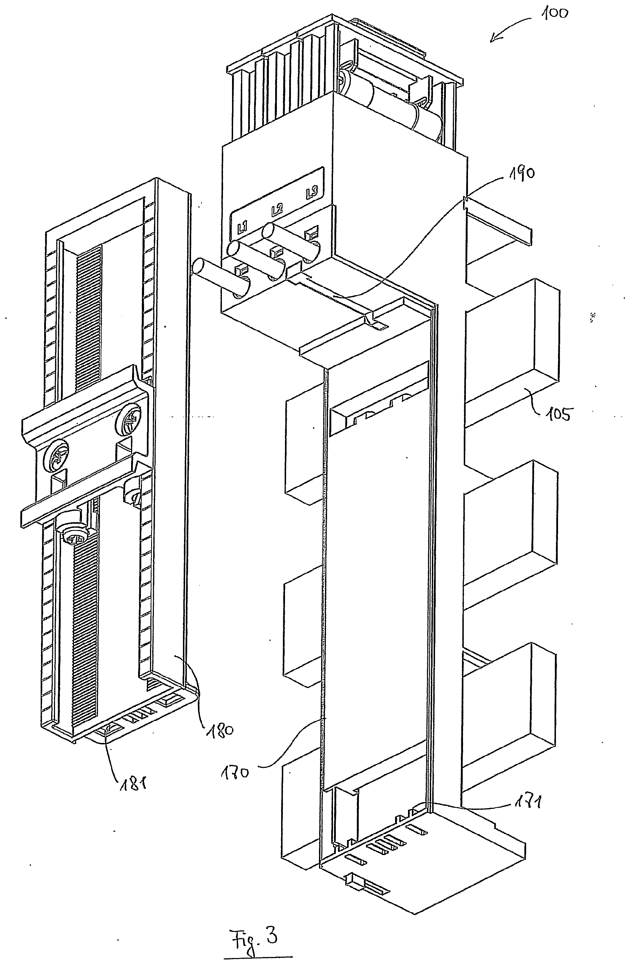

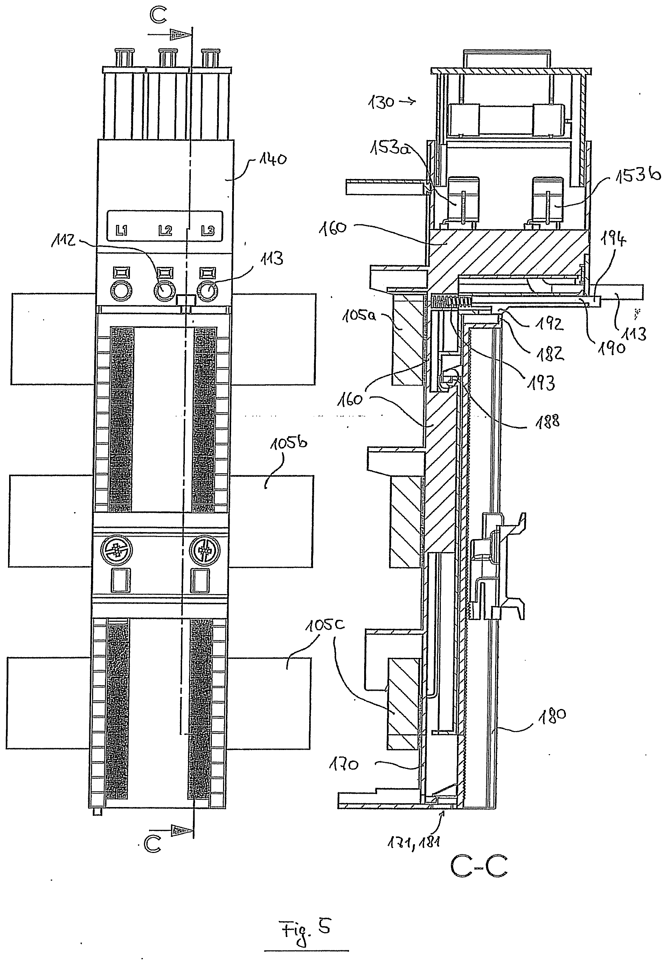

Fig. 3 zeigt den Sammelschienenadapter 100, wie er in der Fig. 2 zu sehen ist, jedoch mit abgenommen Oberdeckelement 180, wobei zum Abnehmen des Oberdeckelementes 180 die Verriegelungsvorrichtung 190 betätigt wurde. Dazu ist die Verriegelungsvorrichtung 190 als ein Schieber ausgebildet, so dass durch ein Herunterschieben (in Richtung zu den Stromschienen 105) das Oberdeckelement 180 parallel zu dem Unterdeckelement 170 in einer Ebene, die durch die drei Stromschienen 105 aufgespannt wird, bewegbar ist und eine Öffnung 181 des Oberdeckelement 180 sich von einem Vorsprung 171 am Unterdeckelementes 170 lösen kann und so abgenommen werden kann (für weitere Details siehe Fig. 5 bis 7).

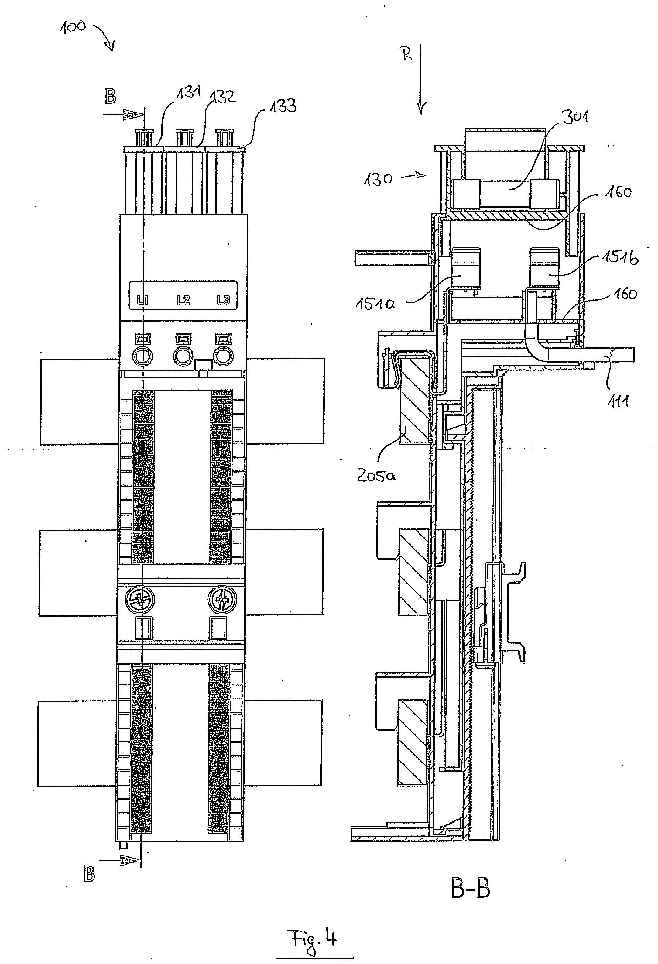

Fig. 4 zeigt einen Stromschienenadapter 100 in einer Draufsicht und einer Querschnittsansicht, wobei die Querschnittsansicht mit der Querschnittsansicht der Fig. 1 übereinstimmt. Die Sicherungseinheit 130 weist wiederum drei Schieber 131, 132, 133 auf, die alle herausgezogen wurden, sodass alle Strompfade zwischen den Stromzuleitungen 111, 112, 113 und den Stromschienen 105 unterbrochen sind. Erst durch ein Reinschieben der drei Schieber 131, 132 133 in die Einschubrichtung R verbindet die erste Sicherung 301 (die in der Querschnittsansicht B-B gezeigt ist) den ersten Kontakt 151a der ersten Sicherungseinheit 151 mit dem zweiten Kontakt 151b der ersten Sicherungshalterung 151, um so den ersten Strompfad zwischen der ersten Stromzuleitung 111 und der ersten Stromschiene 105a zu schließen.

Die erste Sicherung 301 in dem ersten Schieber 131 ist beispielsweise lediglich hinsichtlich der Einschubrichtung R beziehungsweise entgegengesetzt zu der Einschubrichtung R abgestützt, nicht jedoch senkrecht dazu (senkrecht zur Zeichenebene der Querschnittsansicht B-B), so dass ein einfaches Herausnehmen der ersten Sicherung 301 durch einen Nutzer ermöglicht wird. Nach dem Einschieben ist die erste Sicherung 301 durch die Sicherungshalterung fixiert. Ferner kann sowohl die Sicherungseinheit 130 als auch die Gehäusestruktur 140 Isolierwände 160 aufweisen, die ausgebildet sind, um die Strompfade voneinander zu isolieren beziehungsweise die Strompfade von unbeabsichtigten äußeren Eingriffen zu schützen.

Die Fig. 5 zeigt eine Querschnittsansicht C-C, die zwischen der zweiten Stromzuleitung 112 und der dritten Stromzuleitung 113 gelegt ist, wobei wiederum die Sicherungen zusammen mit den Schiebern der Sicherungseinheit 130 aus der Gehäusestruktur 140 herausgezogen wurden, so dass die Strompfade unterbrochen sind.

Die Querschnittsebene C-C ist in der Fig. 5 derart gelegt, dass sie eine der Isolierwände 160 passiert, die den zweiten Strompfad, der die zweite Stromzuleitung 112 mit der zweiten Stromschiene 105b verbindet, von dem dritten Strompfad, der die dritte Stromzuleitung 113 mit der dritten Stromschiene 105c verbindet, isoliert. Somit bewirkt die Isolierwand 160, dass selbst wenn die zweite Stromzuleitung 112 oder die dritte Stromzuleitung 113 durch ein flexibles Material (z. B. einen Draht) ausgebildet sind, diese beiden Stromzuleitungen sich nicht kontaktieren können und in einem sicheren Abstand voneinander gehalten werden. Die gezeigte Isolierwand 160 erstreckt sich entlang der gesamter Länge, auf der der zweite und der dritte Strompfad parallel zueinander verlaufen und gewährleistet damit eine sichere Isolierung. Insbesondere ist so der Abschnitt, der von der dritten Sicherungshalterung 153 mit den Kontakten 153a, 153b zu der dritten Stromschiene 105c verläuft, vollkommen in die Gehäusestruktur 140 eingebettet, so dass ein unbeabsichtigtes Überbrücken durch die gewählte Anordnung ausgeschlossen wird.

Ferner geht der Querschnitt die Fig. 5 durch die Verriegelungsvorrichtung 190, die in ihrer Verriegelungsposition ist und die eine Verschiebung des Oberdeckelements 180 relativ zum Unterdeckelement 170 in einer Richtung parallel oder antiparallel zur Längsachse des Unterdeckelements 170 verhindert. Die Verriegelungsvorrichtung 190 umfasst den Verriegelungsschieber, der an dem Unterdeckelement 170 befestigt und mittels einer Feder 193 (oder Federvorrichtung) in die Verriegelungsposition vorgespannt wird. Wie die Fig. 5 deutlich zeigt, befindet sich Verriegelungsschieber in seiner oberen Position (nach links in der Fig. 5), also in der Verriegelungsposition. In diesem Zustand liegt ein Vorsprung 192 des Verriegelungsschiebers 190 so vor einer Kante 182 des Oberdeckelements 180, dass eine Verschiebung des Oberdeckelements 180 in eine Richtung parallel oder antiparallel zur Längsachse des Unterdeckelements 170 (in Fig. 5 nach oben), zuverlässig verhindert wird, so dass das Oberdeckelement 180 nicht von dem Unterdeckelement 170 abgenommen werden kann.

Das Oberdeckelement 180 und das Unterdeckelement 170 weisen eine erste Arretierung 188 auf, die ein Ineinandergreifen des Oberdeckelementes 180 und des Unterdeckelementes 170 bewirkt, wenn beide Deckelemente in der verriegelten Position sich befinden. Die erste Arretierung 188 ist beispielsweise derart ausgebildet, dass an dem Unterdeckelement 170 ein Vorsprung und an dem Oberdeckelement 180 eine Vertiefung ausgebildet ist, wobei der Vorsprung des Unterdeckelements 170 in die Vertiefung des Oberdeckelementes 180 greift und nur dann voneinander gelöst werden kann, wenn das Oberdeckelement 180 relativ zu dem Unterdeckelement 170 lateral verschoben wird. In ähnlicher Weise ist die zweite Arretierung 171, 181 derart ausgebildet, dass der Vorsprung 171 von dem Unterdeckelement 170 in die Vertiefung oder Öffnung 181 des Oberdeckelementes hineinragt, so dass ein Lösen nur dann möglich ist, wenn das Oberdeckelement 180 lateral zu dem Unterdeclcelement 171 verschoben wird (siehe Fig. 3). Die erste und zweite Arretierung 188, 171/181 sind dabei lateral zueinander versetzt auf dem Oberdeckelement 180 und dem Unterdeckelement 170 angeordnet. Beispielsweise kann eine der Arretierungen an einer Stirnseite des Oberdeckelementes 180 und des Unterdeckelementes 170 ausgebildet sein.

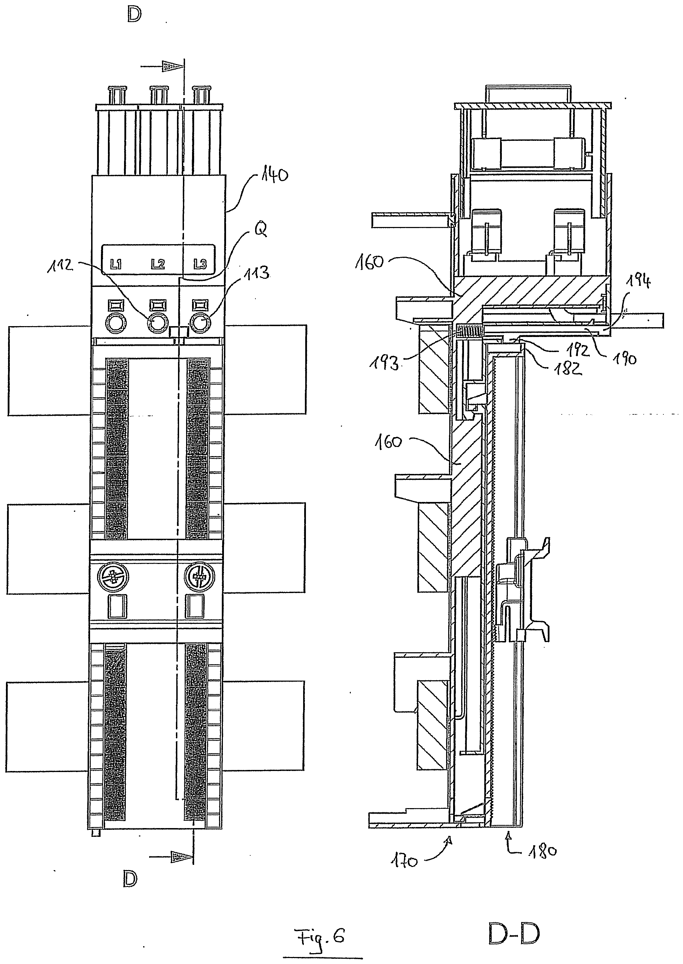

Fig. 6 zeigt eine weitere Querschnittsansicht entlang der Querschnittslinien D-D, die wiederum zwischen dem zweiten und dritten Strompfad verläuft, wobei in der Fig. 6 die Verriegelungsvorrichtung 190 der Fig. 5 sich in ihrer entriegelten Position befindet. Dies kann dadurch geschehen, dass ein Nutzer einen weiteren Vorsprung 194 in Richtung des Unterdeckelementes 170 drückt (in den Fig. 5 und 6 nach links), so dass der Verriegelungsschieber 190 entgegen der Federspannung des Feder 193 in Richtung auf das Unterdeckelement 180 gedrückt wird, so dass der Vorsprung 192 ebenfalls nach links bewegt wird und die Kante 182 des Oberdeckelements 180 nun in Richtung zur Längsachse des Unterdeckelements 170 (in den Figuren 5 und 6 nach oben) bewegt werden kann, und das Oberdeckelement 180 von dem Unterdeckelement 170 abgenommen werden kann.

Alle weiteren Elemente sind analog zu dem in der Fig. 5 gezeigten Ausführungsbeispiel, wobei die Isolierwand 160 in der Querschnittsansicht D-D nur verkürzt erscheint, da der Querschnitt D-D an der Stelle Q verschoben wurde. Die Seitenwände 160 können beispielsweise ebenfalls (wie in den anderen Figuren auch) in den Schiebern 131, 132, 133 ausgebildet sein, so dass der erste Schieber 131, der zweite Schieber 132 und der dritte Schieber 133 voneinander isoliert sind, wenn der erste Schieber 131, der zweite Schieber 132 und der dritte Schieber 133 in die Gehäusestrulctur 140 eingeschoben sind. Damit wird eine vollständige und zuverlässige Isolierung der gesamten Strompfade durch Isolierwände 160 der Gehäusestruktur 140 erreicht.

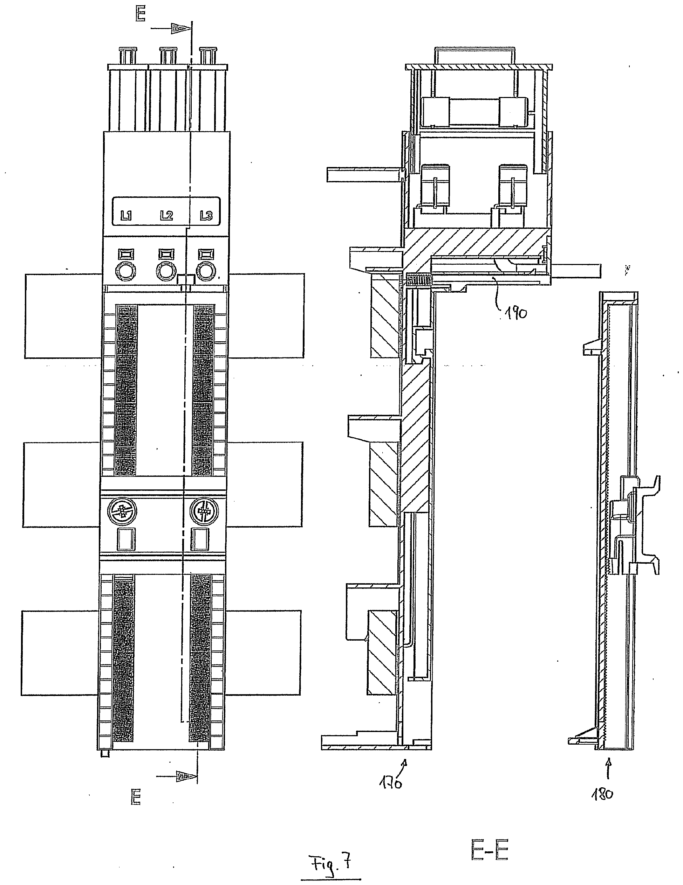

Fig. 7 zeigt eine Querschnittsansicht E-E, die sich von der in der Fig. 6 gezeigten Ansicht lediglich dadurch unterscheidet, dass das Oberdeckelement 180 von dem Unterdeckelement 170 abgenommen wurde, in dem die Verriegelungsvorrichtung 190, wie es in der Fig. 6 ersichtlich ist, durch einen Nutzer heruntergedrückt wurde, um so die Arretierung zwischen dem Oberdeckelement 180 und dem Unterdeckelement 170 zu lösen. Alle weiteren Details sind analog zu den zuvor beschriebenen Ausführungsbeispielen.

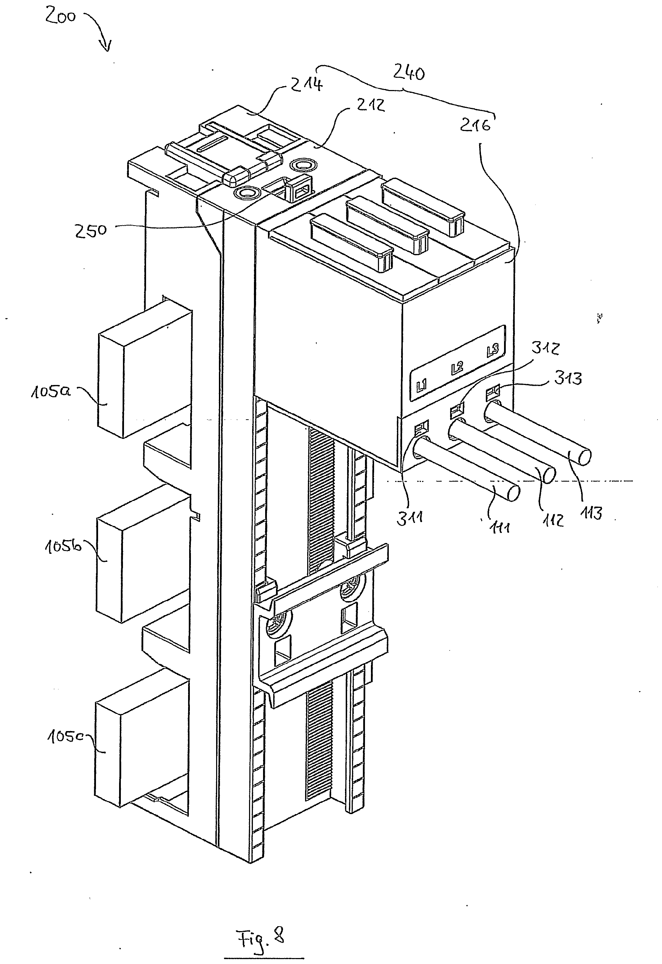

Fig. 8 zeigt ein weiteres Ausführungsbeispiel für einen Schienenadapter 200, bei dem die Gehäusestruktur 240 ein Unterdeck 214, ein Oberdeck 212 und ein Sicherungsdeck 216 aufweist, wobei das Sicherungsdeck 216 abnehmbar mit dem Unterdeck 214 und dem Oberdeck 212 verbunden ist und die Sicherungseinheit 130 aufweist.

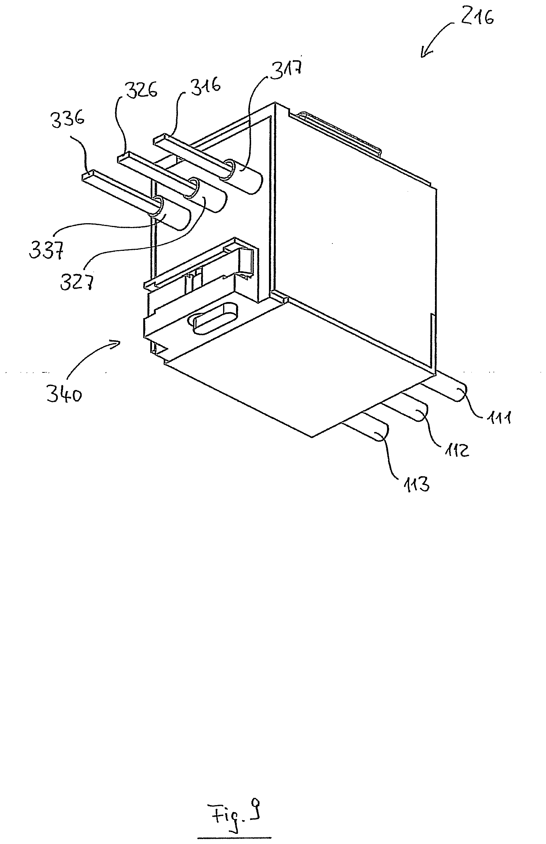

Durch das Verlegen der Sicherungseinheit 130 in ein separates Sicherungsdeck 216, sind in diesem Ausführungsbeispiel sowohl das Oberdeck 212 als auch das Unterdeck 214 anders ausgebildet als die zuvor beschriebenen Deckelemente. Das Oberdeck 212 ist bei diesem Ausführungsbeispiel zwischen dem Unterdeck 214 und dem Sicherungsdeck 216 angeordnet. Das Ober- und Unterdeck 212, 214 weisen beispielsweise eine gleiche laterale Ausdehnung auf und alle Deckteile sind beispielsweise über separate Verriegelungsmechanismen einzeln miteinander verbunden. Weitere Details des Sicherungsdecks werden mit den Fig. 9 - 11 beschrieben.

Fig. 9 zeigt das Sicherungsdeck 216 aus der Fig. 8 nach dem Abnehmen von dem Ober- und Unterdeck 212, 214. Das Sicherungsdeck 216 weist die erste Stromzuleitung 111, die zweite Stromzuleitung 112 und die dritte Stromzuleitung 113 auf. Ferner weist das Sicherungsdeck 216 ein erstes Kontaktelement 316, ein zweites Kontaktelement 326 und ein drittes Kontaktelement 336 auf. Das erste Kontaktelement 316 ist über einen ersten (gesicherten) Strompfad mit der ersten Stromzuleitung 111 verbunden, das zweite Kontaktelement 326 ist über einen zweiten (gesicherten) Strompfad mit der zweiten Stromzuleitung 112 verbunden und das dritte Kontaktelement 336 ist über einen dritten (gesicherten) Strompfad mit der dritten Stromzuleitung 113 verbunden. Die gesicherten Strompfade sind wiederum mit Sicherungen wie zuvor beschrieben abgesichert. Das erste Kontaktelement 316 ist in eine erste Öffnung (nicht gezeigt) des Oberdecks 212 einsetzbar, das zweite Kontaktelement 326 ist in eine zweite Öffnung des Oberdecks 212 einsetzbar und das dritte Kontaktelement 336 ist eine dritte Öffnung des Oberdecks 212 einsetzbar. Die ersten bis dritten Kontaktelemente 316 bis 336 sind über ein Hebelelement 250, wie es in der Fig. 8 an der Seitenwand gezeigt ist, mit dem Oberdeck 212 oder dem Unterdeck 214 kontaktierbar.

In der Fig. 8 sind das Oberdeck 212 und das Unterdeck214 wiederum über einen Arretiermechanismus miteinander verbunden, der eine lösbare Verbindung bereitstellt. Die Arretierung kann so ausgebildet sein, wie es in den Fig. 5 - 7 beschrieben wurde. Die weiteren Details dieses Arretiermechanismus sind für die Erfindung nicht weiter von Bedeutung und werden daher nicht beschrieben.

Das Kontaktieren des Sicherungsdecks 216 mittels des Hebelschalters 250 kann über Federklemmen erfolgen, so dass gleichzeitig eine Kontaktierung des ersten Kontaktelementes 316 mit der ersten Kontaktverbindung 121 und eine Kontaktierung des zweiten Kontaktelementes 326 mit der zweiten Kontaktverbindung 122 und des dritten Kontaktelementes 336 mit der dritten Kontalctverbindung 123 erfolgt. Als Resultat werden die erste bis dritte Stromzuleitungen 111 bis 113 jeweils mit einem der Stromschienen 105a - 105c über 3 Strompfade elektrisch verbunden.

Das Sicherungsdeck 216, wie es in der Fig. 9 gezeigt ist, weist ferner einen optionalen Fixiermechanismus 340 auf, der ausgebildet ist, um beispielsweise das Sicherungsdeck 216 an dem Oberdeck 212 zu befestigen, um so einen sicheren Halt des Sicherungsdecks 216 zu ermöglichen. Um die Isolierung der Strompfade weiter zu verbessern, weisen die ersten bis dritte Kontaktelemente 316, 326 und 336 jeweils eine Isolierhülle 317, 327, 337 auf, so dass stromführende Teile nur dort frei liegen, wo eine Kontaktierung über die beispielhaften Federklemmen erfolgt.

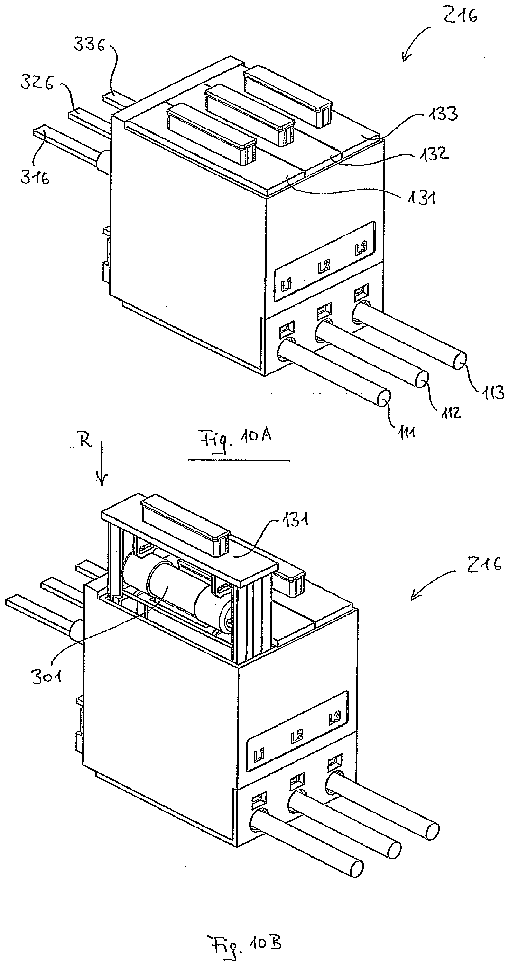

Die Fig. 10A und 10B zeigen weitere Raumansichten des Sicherungsdecks 216, wobei in der Fig. 10A das Sicherungsdeck 216 von der Seite der Stromzuleitungen 111, 112, 113 zu sehen ist. Die Sicherungseinheit 130 weist wiederum drei Schieber 131, 132, 133 auf, die es ermöglichen, die erste bis dritte Sicherung (nicht gezeigt) einzeln herauszuziehen, um so den Strompfad zu unterbrechen.

Die Fig. 10B zeigt ein Beispiel, bei dem die erste Sicherung 301 durch den ersten Schieber 121 aus dem Sicherungsdeck 216 herausgeschoben wurde. Der Schieber (hier z.B. der erste Schieber 131) ist dabei wieder derart ausgebildet, dass ein Herausnehmen der ersten Sicherung 301 in eine Richtung senkrecht zur Einschubrichtung R durch einen Nutzer leicht möglich ist und der Schieber lediglich eine Fixierung entlang der Einschubrichtung R oder entgegengesetzt dazu bereitstellt. Weitere Details der Sicherungseinrichtung 130 unterscheiden sich nicht von der Sicherungseinrichtung wie sie zuvor mit den Fig. 1 bis 7 beschrieben wurden.

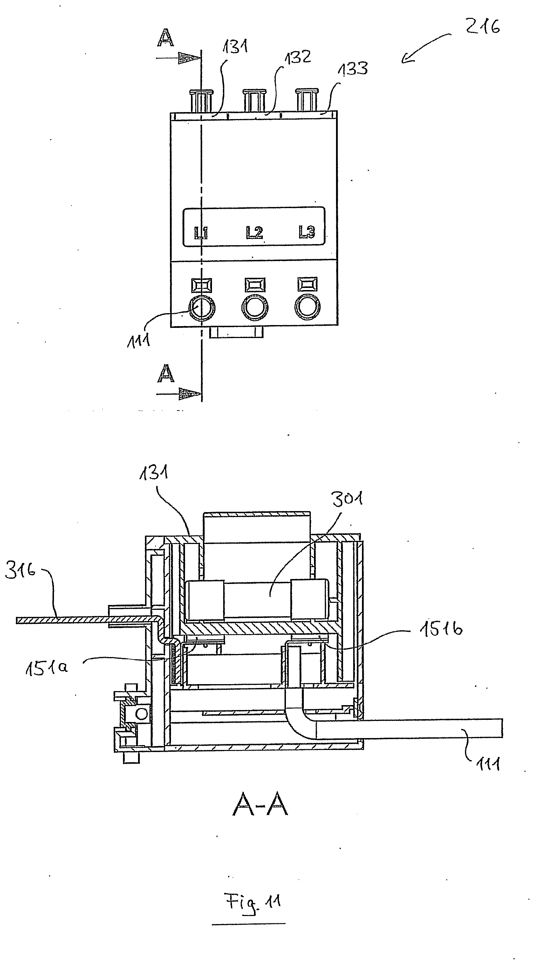

Fig. 11 zeigt eine Querschnittsansicht entlang der Querschnittslinie A-A des Sicherungsdecks 216, wobei die Querschnittsansicht durch die erste Sicherung 301 verläuft und den Strompfad von der ersten Stromzuleitung 111 zu dem ersten Kontaktelement 316 zeigt. Entlang des Strompfades von der ersten Stromzuleitung 111 erfolgt zunächst eine Kontaktierung der Sicherungshalterung 151, die in der Fig. nur als Querschnitt zu sehen ist und die wie zuvor auch einen ersten und zweiten Kontakt 151a, 151b aufweist. Die erste Sicherung 301 verbindet das erste Kontaktelement 316 über den ersten Kontakt 151a der Sicherungshalterung 151 mit dem zweiten Kontakt 151b der Sicherungshalterung 151. Somit entsteht ein erster gesicherter Strompfad von der ersten Stromzuleitung 111 hin zu dem ersten Kontaktelement 316 über die erste Sicherung 301, der durch ein Hineinschieben des ersten Schiebers 131 der Sicherungseinheit 130 geschlossen wird, und durch ein Herausziehen des ersten Schiebers 131 der Sicherungseinheit 130 geöffnet wird. Die zweite und dritte Sicherung in dem zweiten und dritten Schieber 132, 133 sind in der gleichen Weise aufgebaut, so dass auf eine wiederholte Beschreibung hier verzichtet werden kann.

Die in der Beschreibung, den Ansprüchen und den Zeichnungen offenbarten Merkmale der Erfindung können sowohl einzeln als auch in beliebigen Kombinationen für die Verwirklichung wesentlich sein.

## Patentansprüche

1. Sammelschienenadapter (100, 200) zum Kontaktieren von zumindest einer ersten und einer zweiten Sammelschiene (105), mit folgenden Merkmalen:
zumindest einer ersten Stromzuleitung (111) und einer zweiten Stromzuleitung (112);
zumindest einer ersten Kontaktverbindung (121) und einer zweiten Kontaktverbindung (122), um eine Verbindung zu den zumindest zwei Sammelschienen (105) herzustellen;
einer Sicherungseinheit (130) mit zumindest einer ersten Sicherungshalterung (151) und einer zweiten Sicherungshalterung (152), wobei die erste und zweite Sicherungshalterungen (151, 152) ausgebildet sind, um eine erste Sicherung (301) und eine zweite Sicherung (302) lösbar zu halten, sodass nach einem Einsetzen der ersten Sicherung (301) in die erste Sicherungshalterung (151) die erste Stromzuleitung (111) und die erste Kontaktverbindung (121) verbunden sind, um einen ersten Strompfad bereitzustellen, und nach einem Einsetzen der zweiten Sicherung (302) in die zweite Sicherungshalterung (152) die zweite Stromzuleitung (112) und die zweite Kontaktverbindung (122) verbunden sind, um einen zweiten Strompfad bereitzustellen;
**dadurch gekennzeichnet dass**,
der Sammelschienenadapter ferner folgende Merkmale aufweist:
eine Gehäusestruktur (140, 240) zum Unterbringen der Sicherungseinheit (130) und der ersten und zweiten Kontaktverbindungen (121, 122), wobei die Gehäusestruktur (140, 240) Isolierwände (160) aufweist, die ausgebildet sind, um den ersten Strompfad von dem zweiten Strompfad zu isolieren,
wobei die Gehäusestruktur (140) ein Oberdeckelement (180), ein Unterdeckelement (170) und eine Verriegelungsvorrichtung (190) aufweist, wobei die Verriegelungsvorrichtung (190) ausgebildet ist, um das Oberdeckelement (180) und das Unterdeckelement (170) miteinander zu verriegeln, und wobei das Oberdeckelement (180) ausgebildet ist, um elektrische Geräte daran zu befestigen und das Unterdeckelement (170) ausgebildet ist, um eine elektrische Verbindung mit der ersten und zweiten Sammelschienen (105) bereitzustellen,
wobei der Sammelschienenadapter ferner eine Tragschiene (600) aufweist, die ausgebildet ist, um elektrische Geräte in unterschiedlichen Positionen an dem Oberdeckelement (180) oder an dem Oberdeck (212) des Sammelschienenadapters (100, 200) daran zu befestigen.

2. Sammelschienenadapter (100, 200) nach Anspruch 1, wobei die Sicherungseinheit (130) zumindest einen herausziehbaren Schieber (131) aufweist, der ausgebildet ist, um die erste Sicherung (301) und/oder die zweite Sicherung (302) aus der Sicherungseinheit (130) herauszuziehen, um dadurch den ersten und zweiten Strompfad zu öffnen.

3. Sammelschienenadapter (100, 200) nach Anspruch 2, wobei der eine herausziehbare Schieber ein erster Schieber (131) zum Herausziehen der ersten Sicherung (301) ist und die Sicherungseinheit (130) weiter einen zweiten Schieber (132) zum Herausziehen der zweiten Sicherung (302) aufweist, wobei der erste und zweite Schieber (131, 132) unabhängig voneinander herausziehbar sind, um dadurch den ersten und zweiten Strompfad unabhängig voneinander zu öffnen.

4. Sammelschienenadapter (100, 200) nach der vorhergehenden Ansprüche, der weiter zumindest eine Lichtsignalisierungseinrichtung (311, 312) aufweist, die ausgebildet ist, um ein Lichtsignal zu geben, wenn die erste und/oder die zweite Sicherung (301, 302) defekt ist/sind.

5. Sammelschienenadapter (100, 200) nach einem der vorhergehenden Ansprüche, der weiter eine dritte Stromzuleitung (113), eine dritte Kontaktverbindung (123) und eine dritte Sicherungshalterung (153) aufweist,
wobei die dritte Sicherungshalterung (153) ausgebildet ist, um eine dritte Sicherung (303) lösbar zu halten, sodass nach einem Einsetzen der dritten Sicherung (303) in die dritte Sicherungshalterung (153) die dritte Stromzuleitung (113) und die dritte Kontaktverbindung (123) verbunden sind, um einen dritten Strompfad bereitzustellen, wobei der dritte Strompfad sowohl von dem ersten Strompfad als auch von dem zweiten Strompfad zumindest teilweise durch zumindest eine der Isolierwände (160) der Gehäusestruktur (140) isoliert ist.

6. Sammelschienenadapter (100) nach Anspruch 1, wobei die Verriegelungsvorrichtung (190) ausgebildet ist, um eine parallele oder antiparallele Verschiebung des Unterdeckelementes (170) und des Oberdeckelementes (180) relativ zueinander zu verhindern, und
wobei die Sicherungseinheit (130) in dem Unterdeckelement (170) ausgebildet ist und das Oberdeckelement (180) lateral neben der Sicherungseinheit (130) angeordnet ist.

7. Sammelschienenadapter (100) nach Anspruch 6, wobei die Verriegelungsvorrichtung (190) einen Verriegelungsschieber aufweist, der ausgebildet ist, um das Unterdeckelement (170) und das Oberdeckelement (180) miteinander zu verriegeln, wobei die Verriegelungsvorrichtung (190) eine Feder (193) aufweist, die den Verriegelungsschieber in seine Verriegelungsposition vorspannt.

8. Sammelschienenadapter (200) nach einem der vorhergehenden Ansprüche, wobei die Gehäusestruktur (240) ein Oberdeck (212) und ein Unterdeck (214) und ein Sicherungsdeck (216) mit der Sicherungseinheit (130) aufweist, die ausgebildet sind, um das Oberdeck (212) zwischen dem Unterdeck (214) und dem Sicherungsdeck (216) trennbar miteinander zu verbinden, und wobei der Sammelschienenadapter (200) ausgebildet ist, um das Oberdeck (212), das Unterdeck (214) und das Sicherungsdeck (216) miteinander zu verriegeln.

9. Sammelschienenadapter nach Anspruch 8, wobei das Sicherungsdeck (216) zumindest ein erstes Kontaktelement (316) und ein zweites Kontaktelement (326) aufweist und das Oberdeck (212) und das Unterdeck (214) Öffnungen aufweisen, um das erste Kontaktelement (316) und das zweite Kontaktelement (326) aufzunehmen und zu fixieren.

10. Sammelschienenadapter (200) nach Anspruch 8 oder Anspruch 9, wobei die Gehäusestruktur (240) weiter eine Schalterverriegelung (250) aufweist, die ausgebildet ist, um nach einem Einführen des Sicherungsdecks (216) mit dem ersten Kontaktelement (316) und dem zweiten Kontaktelement (326) in die Öffnungen des Oberdeck (212) und/oder des Unterdeck (214), das Sicherungsdeck (216) an das Oberdeck (212) und das Unterdeck (214) zu befestigen, so dass der erste Strompfad von der ersten Stromzuleitung (111) über die erste Sicherung (301) über das erste Kontaktelement (316) an die erste Kontaktverbindung (121) ausgebildet ist und der zweite Strompfad von der zweiten Stromzuleitung (112) über die zweite Sicherung (302), das zweite Kontaktelement (326) zu der zweiten Kontaktverbindung (122) ausgebildet ist.

11. Sammelschienenadapter (200) nach Anspruch 10, wobei das Oberdeck (212), das Unterdeck (214) und das Sicherungsdeck (216) über die Schalterverriegelung (250) gemeinsam verriegelt und entriegelt werden können oder das Sicherungsdeck (216) an dem Oberdeck (212) durch einen Fixiermechanismus (340) befestigt ist.

12. Sammelschienenadapter (100, 200) nach einem der vorhergehenden Ansprüchen, wobei die erste, zweite und dritte Sicherungshalterung (151, 152, 153) jeweils einen ersten Kontakt (151a, 152a, 153a) und die erste, zweite und dritte Kontaktverbindung (121, 122, 123) jeweils mit dem ersten Kontakt (151a, 152a, 153a) der ersten, zweiten und dritten Sicherungshalterung (151, 152, 153) einstückig ausgebildet sind.

## Claims

1. A busbar adapter (100, 200) for contacting at least a first and a second busbar (105), having the following features:
at least a first current supply line (111) and a second current supply line (112);
at least a first contact connection (121) and a second contact connection (122) to produce a connection with the at least two busbars (105);
a fuse unit (130) having at least a first fuse holder (151) and a second fuse holder (152), the first and second fuse holders (151, 152) being designed to hold a first fuse (301) and a second fuse (302) detachably so that, after the first fuse (301) has been inserted into the first fuse holder (151), the first current supply line (111) and the first contact connection (121) are connected to provide a first current path, and, after the second fuse (302) has been inserted into the second fuse holder (152), the second current supply line (112) and the second contact connection (122) are connected to provide a second current path;
**characterised in that**
the busbar adapter also has the following features:
a housing structure (140, 240) for accommodating the fuse unit (130) and the first and second contact connections (121, 122), wherein the housing structure (140, 240) has isolating walls (160) which are designed to isolate the first current path from the second current path,
wherein the housing structure (140) has an upper deck element (180), a lower deck element (170) and a locking device (190), wherein the locking device (190) is designed to lock the upper deck element (180) and the lower deck element (170) to each other, and wherein the upper deck element (180) is designed to fasten electrical devices thereto, and the lower deck element (170) is designed to provide an electrical connection to the first and second busbars (105),
wherein the busbar adapter also has a mounting rail (600) which is designed to fasten electrical devices to the upper deck element (180) or to the upper deck (212) of the busbar adapter (100, 200) in different positions thereon.

2. The busbar adapter (100, 200) according to Claim 1, wherein the fuse unit (130) has at least one pull-out slide (131) which is designed to pull the first fuse (301) and/or the second fuse (302) out of the fuse unit (130) in order to open the first and second current path.

3. The busbar adapter (100, 200) according to Claim 2, wherein one pull-out slide is a first slide (131) for pulling out the first fuse (301), and the fuse unit (130) also has a second slide (132) for pulling out the second fuse (302), wherein the first and second slides (131, 132) can be pulled out independently of each other in order to open the first and second current path independently of each other.

4. The busbar adapter (100, 200) according to the preceding claims, which also has at least one light signalling apparatus (311, 312) which is designed to give a light signal when the first and/or second fuse (301, 302) is/are defective.

5. The busbar adapter (100, 200) according to any one of the preceding claims, which also has a third current supply line (113), a third contact connection (123) and a third fuse holder (153),
wherein the third fuse holder (153) is designed to hold a third fuse (303) detachably so that, after the third fuse (303) has been inserted into the third fuse holder (153), the third current supply line (113) and the third contact connection (123) are connected to provide a third current path,
wherein the third current path is isolated both from the first current path and from the second current path at least partially by at least one of the isolating walls (160) of the housing structure (140).

6. The busbar adapter (100) according to Claim 1, wherein the locking device (190) is designed to prevent parallel or anti-parallel displacement of the lower deck element (170) and of the upper deck element (180) relative to each other, and
wherein the fuse unit (130) is formed in the lower deck element (170), and the upper deck element (180) is arranged laterally next to the fuse unit (130).

7. The busbar adapter (100) according to Claim 6, wherein the locking device (190) has a locking slide which is designed to lock the lower deck element (170) and the upper deck element (180) to each other, wherein the locking device (190) has a spring (193) which prestresses the locking slide in the locking position thereof.

8. The busbar adapter (200) according to any one of the preceding claims, wherein the housing structure (240) has an upper deck (212) and a lower deck (214) and a fuse deck (216) with the fuse unit (130) which are designed to connect the upper deck (212) between the lower deck (214) and the fuse deck (216) detachably to one another, and wherein the busbar adapter (200) is designed to lock the upper deck (212), the lower deck (214) and the fuse deck (216) to one another.

9. The busbar adapter according to Claim 8, wherein the fuse deck (216) has at least a first contact element (316) and a second contact element (326), and the upper deck (212) and the lower deck (214) have openings to receive and fix the first contact element (316) and the second contact element (326).

10. The busbar adapter (200) according to Claim 8 or Claim 9, wherein the housing structure (240) also has a switch lock (250) which is designed to fastened the fuse deck (216) to the upper deck (212) and the lower deck (214) after the fuse deck (216) together with the first contact element (316) and the second contact element (326) has been introduced into the openings in the upper deck (212) and/or lower deck (214), so that the first current path is formed from the first current supply line (111) via the first fuse (301) and the first contact element (316) to the first contact connection (121), and the second current path is formed from the second current supply line (112) via the second fuse (302) and the second contact element (326) to the second contact connection (122).

11. The busbar adapter (200) according to Claim 10, wherein the upper deck (212), the lower deck (214) and the fuse deck (216) can be locked and unlocked together by means of the switch lock (250), or the fuse deck (216) is fastened to the upper deck (212) by a fixing mechanism (340).

12. The busbar adapter (100, 200) according to any one of the preceding claims, wherein the first, second and third fuse holders (151, 152, 153) each have a first contact (151a, 152a, 153a), and the first, second and third contact connections (121, 122, 123) are each formed integrally with the first contact (151a, 152a, 153a) of the first, second and third fuse holders (151, 152, 153).

## Revendications

1. Adaptateur de barre omnibus (100, 200) pour la mise en contact d'au moins une première et une seconde barres omnibus (105), comportant les caractéristiques suivantes :
au moins un premier câble d'alimentation électrique (111) et un deuxième câble d'alimentation électrique (112) ;
au moins une première liaison de contact (121) et une deuxième liaison de contact (122) pour établir une liaison avec les au moins deux barres omnibus (105) ;
une unité de fusibles (130) comportant au moins un premier support de fusible (151) et un deuxième support de fusible (152), les premier et deuxième supports de fusible (151, 152) étant conçus pour maintenir un premier fusible (301) et un deuxième fusible (302) de manière dissociable de sorte que, après une insertion du premier fusible (301) dans le premier support de fusible (151), le premier câble d'alimentation électrique (111) et la première liaison de contact (121) soient connectés pour créer un premier trajet de courant et que, après une insertion du deuxième fusible (302) dans le deuxième support de fusible (152), le deuxième câble d'alimentation électrique (112) et la deuxième liaison de contact (122) soient connectés pour créer un second trajet de courant ;
**caractérisé en ce que**
l'adaptateur de barre omnibus présente en outre les caractéristiques suivantes :
une structure de boîtier (140, 240) pour loger l'unité de fusibles (130) et les première et deuxième liaisons de contact (121, 122), la structure de boîtier (140, 240) présentant des parois isolantes (160) qui sont conçues pour isoler le premier trajet de courant en outre un du second trajet de courant,
la structure de boîtier (140) présentant un élément de pont supérieur (180), un élément de pont inférieur (170) et un dispositif de verrouillage (190), le dispositif de verrouillage (190) étant conçu pour verrouiller ensemble l'élément de pont supérieur (180) et l'élément de pont inférieur (170) et l'élément de pont supérieur (180) étant conçu pour y fixer des appareils électriques et l'élément de pont inférieur (170) pour créer une liaison électrique avec les première et seconde barres omnibus (105),
l'adaptateur de barre omnibus présentant en outre un rail porteur (600) qui est conçu pour fixer des appareils électriques dans différentes positions à l'élément de pont supérieur (180) ou au pont supérieur (212) de l'adaptateur de barre omnibus (100, 200).

2. Adaptateur de barre omnibus (100, 200) selon la revendication 1, dans lequel l'unité de fusibles (130) présente au moins un tiroir extractible (131) qui est conçu pour extraire le premier fusible (301) et/ou le deuxième fusible (302) de l'unité de fusibles (130) pour ouvrir ainsi les premier et second trajets de courant.

3. Adaptateur de barre omnibus (100, 200) selon la revendication 2, dans lequel le tiroir extractible est un premier tiroir (131) pour l'extraction du premier fusible (301) et l'unité de fusibles (130) présente en outre un second tiroir (132) pour extraire le deuxième fusible (302), les premier et second tiroirs (131, 132) étant extractibles indépendamment l'un de l'autre pour ouvrir ainsi les premier et seconds trajets de courant indépendamment l'un de l'autre.

4. Adaptateur de barre omnibus (100, 200) selon une des revendications précédentes, qui présente en outre au moins un dispositif de signalisation lumineuse (311, 312) qui est conçu pour émettre un signal lumineux lorsque le premier et/ou le deuxième fusible (301, 302) est ou sont défectueux.

5. Adaptateur de barre omnibus (100, 200) selon une des revendications précédentes, qui présente en outre un troisième câble d'alimentation électrique (113), une troisième liaison de contact (123) et un troisième support de fusible (153),
le troisième support de fusible (153) étant conçu pour maintenir un troisième fusible (303) de manière dissociable de sorte que, après une insertion du troisième fusible (303) dans le support de fusible (153), le troisième câble d'alimentation électrique (113) et la troisième liaison de contact (123) sont connectés pour créer un troisième trajet de courant,
le troisième trajet de courant étant isolé du moins partiellement aussi bien du premier trajet de courant que du deuxième trajet de courant par au moins une des parois isolantes (160) de la structure de boîtier (140).

6. Adaptateur de barre omnibus (100, 200) selon la revendication 1, dans lequel le dispositif de verrouillage (190) est conçu pour empêcher un décalage parallèle ou antiparallèle de l'élément de pont inférieur (170) et de l'élément de pont supérieur (180) l'un par rapport à l'autre, et
l'unité de fusibles (130) étant réalisée dans l'élément de pont inférieur (170) et l'élément de pont supérieur (181) étant disposé près de l'unité de fusibles (130).

7. Adaptateur de barre omnibus (100) selon la revendication 6, dans lequel le dispositif de verrouillage (190) présente un curseur de verrouillage qui est conçu pour verrouiller ensemble l'élément de pont inférieur (170) et l'élément de pont supérieur (180), le dispositif de verrouillage (190) présentant un ressort (193) qui précontraint le curseur de verrouillage dans sa position de verrouillage.

8. Adaptateur de barre omnibus (200) selon une des revendications précédentes, dans lequel la structure de boîtier (240) présente un pont supérieur (212) et un pont inférieur (214) et un pont de fusibles (216) comportant l'unité de fusibles (130) qui sont conçus pour connecter ensemble le pont supérieur (212) entre le pont inférieur (214) et le pont de fusibles (212) de manière séparable, et l'adaptateur de barre omnibus (200) est conçu pour verrouiller ensemble le pont supérieur (212), le pont inférieur (214) et le pont de fusibles (216).

9. Adaptateur de barre omnibus selon la revendication 8, dans lequel le pont de fusibles (216) présente au moins un premier élément de contact (316) et un second élément de contact (326) et le pont supérieur (212) et le pont inférieur (214) présentent des ouvertures pour recevoir et fixer le premier élément de contact (316) et le second élément de contact (326).

10. Adaptateur de barre omnibus (200) selon la revendication 8 ou la revendication 9, dans lequel la structure de boîtier (240) présente en outre un verrouillage à interrupteur (250) qui est conçu pour, après introduction du pont de fusibles (216) avec le premier élément de contact (316) et le second élément de contact (326) dans les ouvertures du pont supérieur (212) et/ou du pont inférieur (214), fixer le pont de fusibles (216) au pont supérieur (212) et au pont inférieur (214) de sorte que le premier trajet de courant soit réalisé par le premier câble d'alimentation électrique (111) par l'intermédiaire du premier fusible (301) par l'intermédiaire du premier élément de contact (316) vers la première liaison de contact (121) et que le deuxième trajet de courant soit réalisé par le deuxième câble d'alimentation électrique (112) par l'intermédiaire du deuxième fusible (302), du second élément de contact (326) vers la deuxième liaison de contact (122).

11. Adaptateur de barre omnibus (200) selon la revendication 10, dans lequel le pont supérieur (212), le pont inférieur (214) et le pont de fusibles (216) peuvent être verrouillés et déverrouillés ensemble par le dispositif à interrupteur (250) ou le pont de fusibles (216) est fixé au pont supérieur (212) par un mécanisme de fixation (340).

12. Adaptateur de barre omnibus (100, 200) selon une des revendications précédentes, dans lequel les premier, deuxième et troisième supports de fusibles (151, 152, 153) présentent respectivement un premier contact (151a, 152a, 153a) et les première, deuxième et troisième liaisons de contact (121, 122, 123) sont réalisées respectivement en une seule pièce avec le premier contact (151a, 152a, 153a) des premier, deuxième et troisième supports de fusibles (151, 152, 153).
